# EUROPEAN PATENT SPECIFICATION

(11) **EP 2 917 957 B1**
(45) Date of publication and mention of the grant of the patent: **08.08.2018**
(21) Application number: 12888028.3
(22) Date of filing: 12.11.2012
(51) Int. Cl.: H01M 10/0567, H01M 10/052, H01M 10/0569

(54) **NON-AQUEOUS ELECTROLYTIC SOLUTIONS AND ELECTROCHEMICAL CELLS COMPRISING SAME**
NICHTWÄSSRIGE ELEKTROLYTLÖSUNGEN UND ELEKTROCHEMISCHE ZELLEN DAMIT
SOLUTIONS ÉLECTROLYTIQUES NON AQUEUSES ET CELLULES ÉLECTROCHIMIQUES LES COMPRENANT

(43) Date of publication of application: 16.09.2015
(73) Proprietor: Shenzhen Capchem Technology Co. Ltd., Shenzhen City, Guangdong Province, 51811 (CN)
(72) Inventor: LI, Jing, Parma, Ohio 44129 (US); PAYNE, Martin W., Avon, Ohio 44011 (US)
(74) Representative: de Arpe Fernandez, Manuel
(86) International application number: PCT/US2012/064661
(87) International publication number: WO 2014/074118

(56) References cited:
- EP-A1- 2 124 286
- EP-A1- 2 475 041
- EP-A1- 2 511 976
- WO-A1-2008/153296
- WO-A1-2011/099585
- WO-A2-2012/142060
- CN-A- 101 504 993
- JP-A- 2005 251 456
- JP-A- 2007 273 438
- KR-A- 20100 015 616
- KR-A- 20110 083 680
- US-A1- 2006 269 846
- US-A1- 2007 092 802
- US-A1- 2009 291 370
- US-A1- 2011 081 582
- US-A1- 2012 009 485
- US-A1- 2012 189 920
- XU M ET AL: "Effect of propane sultone on elevated temperature performance of anode and cathode materials in lithium-ion batteries", JOURNAL OF POWER SOURCES, ELSEVIER SA, CH, vol. 193, no. 2, 8 April 2009 (2009-04-08) , pages 804-809, XP026251161, ISSN: 0378-7753, DOI: 10.1016/J.JPOWSOUR.2009.03.067 [retrieved on 2009-04-08]

## Description

### TECHNICAL FIELD

The present invention relates to a non-aqueous electrolytic solutions and secondary (rechargeable) electrochemical energy storage devices comprising the same. Such electrolytic solutions enhance electrochemical performance in devices charged to higher voltages, reduce capacity degradation during cycling at these voltages and during high temperature storage and in general improve the overall electrochemical stability of a device made therewith.

### BACKGROUND

Lithium compound containing electric cells and batteries containing such cells are modern means for energy storage devices. For example, lithium ion batteries have been major power sources for cell phones, laptop computers and a host of other portable electronic consumer products. Penetration of this technology into the transportation market and other large scale applications continues to place ever-increasing demands for higher energy density, higher power density and better cycle life. High voltage cathode materials such as 5V LiNi_{0.5}Mn_{1.5}O₄ (LNMO) material have attracted much attention because higher operating voltage facilitates a substantial increase in the energy density of the lithium ion batteries incorporating these cathodes compared with the present 4 V counterpart. Such cathodes require an electrolyte system that can remain stable in that high potential range and can effectively support the cell chemistry in prolonged cycles.

Electrolytes for lithium compound containing energy storage devices are mixtures comprised of one or more highly soluble lithium salts and inorganic additives dissolved in one or more organic solvents. Electrolytes are responsible for ionic conduction between the cathode and the anode in the battery and thus essential to the operation of the system. The conventional carbonate-based electrolytes have been successfully applied in commercial 4V lithium ion batteries. Electrolytes having high level performance are desired when the cell operating window is extended to higher potential to avoid decomposition on the highly oxidative surface of charged cathodes. It is also desired that there be improved the interaction between electrolyte and cathode at high voltage to avoid possible transition metal dissolution from cathodes that can attack the Solid Electrolyte Interphase (SEI) layer on the anode surface and, thus, cause further capacity loss of the cell.

The following is known from the prior art: Document US 2011/081582 A1 discloses a Li-ion battery whose electrolytic solution comprises: (a) LiPF₆, (b) EC/EMC, (c) VEC, (d) FEC and (e) PS. Document WO 2011/099585 A1 discloses a Li-ion battery whose electrolytic solution comprises: (a) LiPF₆, (b) EC/DMC/EMC, (c) VC, (d) LiFSO₃, and (e) PS. Document WO 2012/142060 A2 discloses a Li-ion battery whose electrolytic solution comprises: (a) LiPF₆, (b) EC/EMC, (c) VC, and (d) 10% of (1,1,2,2)-tetrafluoro-3-(1,1,2,2-tetrafluoroethoxy)-propane. Document JP 2007 273438 A discloses a Li-ion battery whose electrolytic solution comprises: (a) LiPF₆, (b) DMC, (c) VC, and (d) a fluorinated compound. The article "Effect of propane sultone on elevated temperature performance of anode and cathode materials in lithium-ion batteries" from XU M ET AL (JOURNAL OF POWER SOURCES, vol. 193, no. 2, 8 April 2009, pages 804-809, XP026251161, ISSN: 0378-7753, DOI: 10.1016/ J.JPOWSOUR.2009.03.067) explicitly describes the compound propane-1,3-sultone PS in an amount of 2% by weight as a "thermal stabilizing additive" in the context of a lithium-ion battery electrolyte.

### SUMMARY

This invention is defined by the claims and the disclosure pertains to non-aqueous electrolytic solutions that comprise (a) one or more ionic salts; (b) one or more solvents; (c) at least one solid electrolyte interphase former; (d) at least one fluorinated compound; and (e) optionally, at least one high temperature stability compound; wherein (c), (d) and (e) are each different compounds and each are different from the ionic salts (a) and solvents (b).

In a first aspect the disclosure involves electrolytes suitable for use in energy storage devices that operate at voltages greater than 4.0 volts.

In a further aspect the disclosure involves non-aqueous electrolytic solutions suitable for use in electrochemical energy storage devices capable of being charged to up to 5.0 volts.

In a further aspect the disclosure involves non-aqueous electrolytic solutions suitable for use in electrochemical energy storage devices capable of being charged from about 4.2 up to about 5.0 volts.

In a further aspect the disclosure involves non-aqueous electrolytic solutions suitable for use in electrochemical energy storage devices (e.g., lithium metal batteries, lithium ion batteries, lithium ion capacitors and supercapacitors) that include one or more SEI (Solid Electrolyte Interphase layer on the anode surface) additives, one or more fluorinated compounds, and optionally, one or more additives that promote improved high temperature performance. One member from each family is preferably present to obtain the desired high voltage performance.

In a further aspect the disclosure provides non-aqueous electrolytic solutions which include (a) one or more lithium salts, (b) one or more carbonate solvents, (c) one or more compounds selected from SEI formers, (d) one or more compounds selected from fluorinated compounds (organic or inorganic based), and (e) optionally, one or more compounds that promote high temperature stability. A member from each of these components is preferably present in the electrolytic solution and wherein (c), (d) and (e) are each different compounds and each are different from the ionic salts (a) and solvents (b).

In a further aspect the disclosure provides an electrolytic solution useful in a lithium or lithium-ion batteries.

In a further aspect the disclosure provides batteries that include an anode and cathode. The major components, including salts, solvents, high voltage additives, anodes, and cathodes, are each described in turn herein below.

In a further aspect the disclosure provides non-aqueous electrolytic solutions that have high voltage stability during room temperature and high temperature cell cycling as well as good performance under high temperature storage conditions.

### DETAILED DESCRIPTION

Before describing several aspects of the disclosure, it is to be understood that the disclosure is not limited to the details of construction or process steps set forth in the following description. The invention is defined by the claims.

Salts. The solute of the electrolytic solution of the invention is an ionic salt containing at least one positive ion. Typically this positive ion is lithium (Li+). The salts herein function to transfer charge between the negative electrode and the positive electrode of the battery system. The lithium salts are halogenated, for example, LiPF₆, LiBF₄, LiSbF₆, LiAsF₆, LiTaF₆, LiAlCl₄, Li₂B₁₀Cl₁₀, Li₂B₁₀F₁₀, LiClO₄, LiCF₃SO₃, Li₂B₁₂FₓH₍₁₂₋ₓ₎ wherein x = 0-12; LiPFₓ(RF)₆₋ₓ and LiBF_{y}(RF)_{4-y} wherein RF represents perfluorinated C₁-C₂₀ alkyl groups or perfluorinated aromatic groups, x = 0-5 and y = 0-3, LiBF₂[O₂C(CX₂)ₙCO₂], LiPF₂[O₂C(CX₂)ₙCO₂]₂, LiPF₄[O₂C(CX₂)ₙCO₂], wherein X is selected from the group consisting of H, F, Cl, C₁-C₄ alkyl groups and fluorinated alkyl groups, and n = 0-4, LiN(SO₂CₘF₂ₘ₊₁)(SO₂CₙF₂ₙ₊₁), and LiC(SO₂CₖF₂ₖ₊₁)(SO₂CₘF₂ₘ₊₁)(SO₂CₙF₂ₙ₊₁), wherein k = 1-10, m = 1-10, and n = 1-10, respectively, LiN(SO₂CₚF₂ₚSO₂), and LiC(SO₂CₚF₂ₚSO₂)(SO₂C_{q}F_{2q+1}) wherein p = 1-10 and q = 1-10, lithium salts of chelated orthoborates and chelated orthophosphates such as lithium bis(oxalato)borate [LiB(C₂O₄)₂], lithium bis(malonato) borate [LiB(O₂CCH₂CO₂)₂], lithium bis(difluoromalonato) borate [LiB(O₂CCF₂CO₂)₂], lithium (malonato oxalato) borate [LiB(C₂O₄)(O₂CCH₂CO₂)], lithium (difluoromalonato oxalato) borate [LiB(C₂O₄)(O₂CCF₂CO₂)], lithium tris(oxalato) phosphate [LiP(C₂O₄)₃], and lithium tris(difluoromalonato) phosphate [LiP(O₂CCF₂CO₂)₃], and any combination of two or more of the aforementioned salts. Most preferably the electrolytic solution comprises LiPF₆ as the ionic salt.

**Solvents.** The solvents to be used in the secondary batteries of the invention can be any of a variety of non-aqueous, aprotic, and polar organic compounds. Generally, solvents may be carbonates, carboxylates, ethers, lactones, sulfones, phosphates, nitriles, and ionic liquids. Useful carbonate solvents herein include, but are not limited to: cyclic carbonates, such as propylene carbonate and butylene carbonate, and linear carbonates, such as dimethyl carbonate, diethyl carbonate, dipropyl carbonate, dibutyl carbonate, ethyl methyl carbonate, methyl propyl carbonate, and ethyl propyl carbonate. Useful carboxylate solvents include, but are not limited to: methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, and butyl butyrate. Useful ethers include, but are not limited to: tetrahydrofuran, 2-methyl tetrahydrofuran, 1,3-dioxolane, 1,4-dioxane, 1,2-dimethoxyethane, 1,2-diethoxyethane, 1,2-dibutoxyethane, methyl nonafluorobutyl ether, and ethyl nonafluorobutyl ether. Useful lactones include, but are not limited to: γ-butyrolactone, 2-methyl-γ-butyrolactone, 3-methyl-γ-butyrolactone, 4-methyl-γ-butyrolactone, β-propiolactone, and δ-valerolactone. Useful phosphates include, but are not limited to: trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, methyl ethylene phosphate, and ethyl ethylene phosphate. Useful sulfones include, but are not limited to: non-fluorinated sulfones, such as dimethyl sulfone and ethyl methyl sulfone, partially fluorinated sulfones, such as methyl trifluoromethyl sulfone, ethyl trifluoromethyl sulfone, methyl pentafluoroethyl sulfone, and ethyl pentafluoroethyl sulfone, and fully fluorinated sulfones, such as di(trifluoromethyl) sulfone, di(pentafluoroethyl) sulfone, trifluoromethyl pentafluoroethyl sulfone, trifluoromethyl nonafluorobutyl sulfone, and pentafluoroethyl nonafluorobutyl sulfone. Useful nitriles include, but are not limited to: acetonitrile, propionitrile, butyronitrile and dinitriles, CN[CH₂]nCN with various alkane chain lengths (n = 1-8). An ionic liquid (IL) is a salt in the liquid state. In some contexts, the term has been restricted to salts whose melting point is below some arbitrary temperature, such as 100 °C (212 °F). ILs are largely made of ions and short-lived ion pairs. Common anions of ILs are TFSI FSi, BOB, DFOB, PF₆₋ₓRₓ, BF₄, etc and cations of ILs are imidazolium, piperidinium, pyrrolidinium, tetraalkylammonium, morpholinium, etc. Useful ionic liquids include, but not limited to: Bis(oxalate)borate (BOB) anion based ionic liquids, such as N-cyanoethyl-N-methylprrrolidinium BOB, 1-methyl-1-(2-methylsulfoxy)ethyl)-pyrrolidinium BOB, and 1-methyl-1-((1,3,2-dioxathiolan-2-oxide-4-yl)methyl)pyrrolidinium BOB; tris(pentafluoroethyl)trifluorophosphate (FAP) anion based ionic liquids, such as N-allyl-N-methylpyrrrolidinium FAP, N-(oxiran-2-ylmethyl)N-methylpyrrolidinium FAP, and N-(prop-2-inyl)N-methylpyrrolidinium FAP; bis(trifluoromethanesulfonyl)imide (TFSI)anion-based ionic liquids, such as N-propyl-N-methylpyrrolidinium TFSI, 1,2-dimethyl-3-propylimidazolium TFSI, 1-octyl-3-methyl-imidazolium TFSI, and 1-butyl-methylpyrrolidinium TFSI; Bis(fluorosulfonyl)imide (FSI) anion-based ionic liquids, such as N-Butyl-N-methylmorpholinium FSI and N-propyl-N-methylpiperidinium FSI; and other ionic liquids such as 1-ethyl-3-methylimidazolium tetrafluoroborate. Two or more of these solvents may be used in the electrolytic solution. Other solvents may be utilized as long as they are non-aqueous and aprotic, and are capable of dissolving the salts, such as N,N-dimethyl formamide, N,N-dimethyl acetamide, N,N-diethyl acetamide, and N,N-dimethyl trifluoroacetamide. Carbonates are preferred, with the most preferred being ethylene carbonate, ethyl methyl carbonate and mixtures thereof.

**Solid Electrolyte Interphase (SEI) formers.** SEI formers are materials that can be reductively decomposed on surfaces of negative electrodes prior to other solvent components to form protective films that suppress excessive decomposition of the electrolytic solutions. SEI has important roles on the charge/discharge efficiency, the cycle characteristics and the safety of nonaqueous electrolyte batteries. Generally, SEI formers can include, but not limited to, vinylene carbonate and its derivatives, ethylene carbonate derivatives having non-conjugated unsaturated bonds in their side chains, halogen atom-substituted cyclic carbonates and salts of chelated orthoborates and chelated orthophosphates. Specific examples of SEI additives include vinylene carbonate(VC), vinylethylene carbonate (VEC), methylene ethylene carbonate (or 4-vinyl-1,3-dioxolan-2-one) (MEC), monofluoroethylene carbonate (FEC), Chloroethylene carbonate (CEC), 4,5-divinyl-1,3-dioxolan-2-one, 4-methyl-5-vinyl-1,3-dioxolan-2-one, 4-ethyl-5-vinyl-1,3-dioxolan-2-one, 4-propyl-5-vinyl-1,3-dioxolan-2-one, 4-butyl-5-vinyl-1,3-dioxolan-2-one, 4-pentyl-5-vinyl-1,3-dioxolan-2-one, 4-hexyl-5-vinyl-1,3-dioxolan-2-one, 4-phenyl-5-vinyl-1,3-dioxolan-2-one, 4,4-difluoro-1,3-dioxolan-2-one and 4,5-difluoro-1,3-dioxolan-2-one, lithium bis(oxalate)borate (LiBOB), lithium bis(malonato)borate (LiBMB), lithium bis(difluoromalonato)borate (LiBDFMB), lithium (malonato oxalato)borate (LiMOB), lithium (difluoromalonato oxalato)borate (LiDFMOB), lithium tris(oxalato)phosphate (LiTOP), and lithium tris(difluoromalonato)phosphate (LiTDFMP). In the context of the claimed invention solid electrolyte interphase formers (c) are selected from the group consisting of vinylene carbonate, monofluoroethylene carbonate, methylene ethylene carbonate, vinyl ethylene carbonate, lithium bis(oxalate)borate and mixtures thereof.

**Fluorinated compounds.** Fluorinated compounds can include organic and inorganic fluorinated compounds.

**Organic fluorinated compounds** - Compounds in the organic family of fluorinated compounds can include fluorinated carbonates, fluorinated ethers, fluorinated esters, fluorinated alkanes, fluorinated alkyl phosphates, fluorinated aromatic phosphates, fluorinated alkyl phosphonates, and fluorinated aromatic phosphonates. Exemplary organic fluorinated compounds include fluorinated alkyl phosphates, such as tris(trifluoroethyl)phosphate, tris(1,1,2,2-tetrafluoroethyl) phosphate, tris(hexafluoroisopropyl)phosphate, (2,2,3,3-tetrafluoropropyl) dimethyl phosphate, bis(2,2,3,3-tetrafluoropropyl) methyl phosphate, and tris(2,2,3,3-tetrafluoropropyl) phosphate; fluorinated ethers, such as 3-(1,1,2,2-tetrafluoroethoxy)-(1,1,2,2-tetrafluoro)-propane, pentafluoropropyl methyl ether, pentafluoropropyl fluoromethyl ether, pentafluoropropyl trifluoromethyl ether, 4,4,4,3,3,2,2-heptafluorobutyl difluoromethyl ether, 4,4,3,2,2-pentafluorobutyl 2,2,2-trifluoroethyl ether, 2-difluoromethoxy-1,1,1-trifluoroethane, and 2-difluoromethoxy-1,1,1,2-tetrafluoroethane; fluorinated carbonates, such as fluoroethylene carbonate, bis(fluoromethyl) carbonate, bis(fluoroethyl) carbonate, fluoroethyl fluoromethyl carbonate, methyl fluoromethyl carbonate, ethyl fluoroethyl carbonate, ethyl fluoromethyl carbonate, methyl fluoroethyl carbonate, bis(2,2,2-trifluoroethyl) carbonate, 2,2,2-trifluoroethyl methyl carbonate, fluoroethylene carbonate, and 2,2,2-trifluoroethyl propyl carbonate. Also suitable are fluorinated esters, such as (2,2,3,3-tetrafluoropropyl) formate, methyl trifluoroacetate, ethyl trifluoroacetate, propyl trifluoroacetate, trifluoromethyl trifluoroacetate, trifluoroethyl trifluoroacetate, perfluoroethyl trifluoroacetate, and (2,2,3,3-tetrafluoropropyl) trifluoroacetate; fluorinated alkanes, such as n-C₄F₉C₂H₅, n-C₆F₁₃C₂H₅, or n-C₈F₁₆H; fluorinated aromatic phosphates, such as tris(4-fluorophenyl) phosphate and pentafluorophenyl phosphate. Fluorinated alkyl phosphonate, such as trifluoromethyl dimethylphosphonate, trifluoromethyl di(trifluoromethyl)phosphonate, and (2,2,3,3-tetrafluoropropyl) dimethylphosphonate; fluorinated aromatic phosphonate, such as phenyl di(trifluoromethyl)phosphonate and 4-fluorophenyl dimethylphosphonate, are suitable. Combinations of two or more of any of the foregoing are also suitable.

**Inorganic fluorinated compounds** - Compounds in the inorganic family of fluorinated compounds include lithium salts of fluorinated chelated orthoborates, fluorinated chelated orthophosphates, fluorinated imides, fluorinated sulfonates. Exemplary inorganic fluorinated compounds include LiBF₂C₂O₄ (LiDFOB), LiPF₄(C₂O₄) (LiTFOP), LiPF₂(C₂O₄)₂ (LiDFOP), LiN(SO₂CF₃)₂ (LiTFSI), LiN(SO₂F)₂ (LiFSI), LiN(SO₂C₂F₅)₂ (LiBETI), LiCF₃SO₃, Li₂B₁₂FₓH₍₁₂₋ₓ₎ where 0 < x ≤ 12 and combinations of two or more thereof.

Particularly useful fluorinated compounds (d) are selected from the group consisting of (1,1,2,2)-tetrafluoro-3-(1,1,2,2-tetrafluoroethoxy)-propane, lithium difluoro(oxalate) borate and mixtures thereof. In the context of the claimed invention the fluorinated compound is (1,1,2,2)-tetrafluoro-3-(1,1,2,2-tetrafluoroethoxy)-propane provided in an amount of 0.1 to 5.0% by weight of the electrolyte solution.

**Compounds that promote high temperature stability.** When batteries are operated or stored at 55°C or above, they tend to have poor capacity retention and swelling phenomenon due to gas generation that results from decomposition of the electrolyte at the cathode. This reduced performance becomes more evident when a cell is charged to higher voltages. High temperature stabilizers can enhance charge-discharge characteristics of batteries and effectively reduce the swelling of batteries at elevated temperatures. They can also help to create a protective layer on the surface of the cathode which will further decrease the amount of solvent oxidation and decomposition at the cathode. Compounds that promote high temperature stability typically include: sulfur-containing linear and heterocyclic, unsaturated and saturated compounds; phosphorus containing linear and heterocyclic, unsaturated and saturated compounds; and compounds that act as HF scavengers.

Sulfur containing compounds include linear and cyclic compounds such as sulfites, sulfates, sulfoxides, sulfonates, thiophenes, thiazoles, thietanes, thietes, thiolanes, thiazolidines, thiazines, sultones, and sulfones. These sulfur containing compounds can include various degrees of fluorine substitution up to and including the fully perfluorinated compunds. Specific examples of sulfur-containing linear and cyclic compounds include ethylene sulfite, ethylene sulfate, thiophene, benzothiophene, benzo[c]thiophene, thiazole, dithiazole, isothiazole, thietane, thiete, dithietane, dithiete, thiolane, dithiolane, thiazolidine, isothiazolidine, thiadiazole, thiane, thiopyran, thiomorpholine, thiazine, dithiane, dithiine; thiepane; thiepine; thiazepine; prop-1-ene-1,3-sultone; propane-1,3-sultone; butane-1,4-sultone; 3-hydroxy-1-phenylpropanesulfonic acid 1,3-sultone; 4-hydroxy-1-phenylbutanesulfonic acid 1,4-sultone; 4-hydroxy-1-methylbutanesulfonic acid 1,4 sultone; 3-hydroxy-3-methylpropanesulfonic acid 1,4-sultone; 4-hydroxy-4-methylbutanesulfonic acid 1,4-sultone; a sulfone having the formula R1(=S(=O)2)R2 where R1 and R2 are independently selected from the group consisting of substituted or unsubstituted, saturated or unsaturated C₁ to C₂₀ alkyl or aralkyl groups; and combinations of two or more thereof. In the context of the claimed invention the sulfur containing compounds (iii)(e) are selected from the group consisting propane-1,3-sultone, butane-1,4-sultone and prop-1-ene-1,3-sultone, each provided in an amount of 0.1 to 5.0% by weight of the electrolyte solution.

Phosphorus containing compounds include linear and cyclic, phosphates and phosphonates. Representative examples of the phosphorus containing compounds include: alkyl phosphates, such as trimethylphosphate, triethylphosphate, triisopropyl phosphate, propyl dimethyl phosphate, dipropyl methyl phosphate, and tripropyl phosphate; aromatic phosphates, such as triphenyl phosphate; alkyl phosphonates include trimethylphosphonate, and propyl dimethylphosphonate; and aromatic phosphonates, such as phenyl dimethylphosphonate. Combinations of any of the foregoing are also suitable.

Compounds that promote high temperature stability also include additives that work as a HF scavenger to prevent battery capacity deterioration and improve output characteristics at high temperatures, including acetamides, anhydrides, Pyridines, tris(trialkylsilyl)phosphates, tris(trialkylsilyl)phosphites, tris(trialkylsilyl)borates. Examples of HF scavenger-type high temperature stabilizers include: acetamides such as, N,N-dimethyl acetamide, and 2,2,2-trifluoroacetamide; anhydrides such as phthalic anhydride succinic anhydride, and glutaric anhydride; pyridines such as antipyridine and pyridine; tris(trialkylsilyl)phosphates such as tris(trimethylsilyl)phosphate and tris(triethylsilyl)phosphate; tris(trialkylsilyl)phosphites tris(trimethylsilyl)phosphite, tris(triethylsilyl)phosphite, tris(tripropylsilyl)phosphit; tris(trialkylsilyl)borates such as, tris(trimethylsilyl)borate, tris(triethylsilyl)borate, and tris(tripropylsilyl)borate; alone or as a mixture of two or more thereof.

In an aspect of the disclosure the solid electrolyte interphase former (iii)(c), fluorinated compounds (iii)(d), high temperature stability compound (iii)(e), each provided in an amount of 0.1 to 20% by weight of the electrolyte solution. In the context of the claimed invention, the solid electrolyte interphase former (iii)(c) is provided in an amount of 0.1 to 20% by weight of the electrolyte solution.

An aspect of the disclosure includes a secondary electrochemical energy storage device comprising
I. an anode;
II. a cathode;
III. an electrolytic solution comprising
   (a) one or more ionic salts;
   (b) one or more non-aqueous solvents;
   (c) at least one solid electrolyte interphase former;
   (d) at least one fluorinated compound; and
   (e) optionally, at least one high temperature stability compound;
wherein (III) (c), (d) and (e) are each different compounds and each are different from the ionic salts (III)(a) and solvents (III)(b). The electrolytic solution components (a) - (e) having been discussed in detail elsewhere herein.

**Anodes.** The anode material is selected from lithium metal, lithium alloys, carbonaceous materials, and lithium metal oxides capable of being intercalated and de-intercalated with lithium ions. Carbonaceous materials useful herein include graphite, amorphous carbon, and other carbon materials such as activated carbon, carbon fiber, carbon black, and mesocarbon microbeads. Lithium metal anodes may be used. Lithium MMOs (mixed-metal oxides) such as LiMnO₂ and Li₄Ti₅O₁₂ are also envisioned. Alloys of lithium with transition or other metals (including metalloids) may be used, including LiAl, LiZn, Li₃Bi, Li₃Cd, Li₃Sb, Li₄Si, Li_{4.4}Pb, Li_{4.4}Sn, LiC₆, Li₃FeN₂, Li_{2.6}Co_{0.4}N, Li_{2.6}Cu_{0.4}N, and combinations thereof. The anode may further comprise an additional material such as a metal oxide including SnO, SnO₂, GeO, GeO₂, In₂O, In₂O₃, PbO, PbO₂, Pb₂O₃, Pb₃O₄, Ag₂O, AgO, Ag₂O₃, Sb₂O₃, Sb₂O₄, Sb₂O₅, SiO, ZnO, CoO, NiO, FeO, and combinations thereof.

**Cathodes.** The cathode comprises at least one lithium transition metal oxide (LiMO), lithium transition metal phosphate (LiMPO₄), or lithium transition metal fluorosilicate (LiMSiOₓF_{y}). Lithium transition metal oxides contain at least one metal selected from the group consisting of Mn, Co, Cr, Fe, Ni, V, and combinations thereof. For example, the following LiMOs may be used in the cathode: LiCoO₂, LiMnO₂, LiMn₂O₄, Li₂Cr₂O₇, Li₂CrO₄, LiNiO₂, LiFeO₂, LiNiₓCo₁₋ₓO₂ (0<x<1), LiMn_{z}Ni_{1-z}O₂ (0<z<1) (which includes LiMn_{0.5}Ni_{0.5}O₂), LiMn_{1/3}Co_{1/3}Ni_{1/3}O₂, LiMc_{0.5}Mn_{1.5}O₄, wherein Mc is a divalent metal, and LiNiₓCo_{y}Me_{z}O₂ wherein Me may be one or more of Al, Mg, Ti, B, Ga, or Si and 0<x,y,z<1. Lithium transition metal phosphate (LiMPO₄) such as LiFePO₄, LiVPO₄, LiMnPO₄, LiCoPO₄, LiNiPO₄, LiMnₓMc_{y}PO₄, where Mc may be one of or of Fe, V, Ni, Co, Al, Mg, Ti, B, Ga, or Si and 0<x,y<1. Furthermore, transition metal oxides such as MnO₂ and V₂O₅, transition metal sulfides such as FeS₂, MoS₂, and TiS₂, and conducting polymers such as polyaniline and polypyrrole may be present. The preferred positive electrode material is the lithium transition metal oxide, especially, LiCoO₂, LiMn₂O₄, LiNi_{0.80}Co_{0.15}Al_{0.05}O₂, LiFePO₄, LiMnPO₄, and LiNi_{1/3}Mn_{1/3}Co_{1/3}O₂. The stoichiometry of elements in the above molecular formulations does not need to be integral. For example, the material could be lithium rich or lithium deficient, that is, the lithium number in the above formula could be larger or smaller than one. Mixtures of such oxides may also be used.

Either the anode or the cathode, or both, may further comprise a polymeric binder. In the preferred embodiment, the binder may be polyvinylidene fluoride, styrene-butadiene rubber, alkali metal salts of carboxymethyl cellulose, alkali metal salts of polyacrylic acid, polyamide or melamine resin, or combinations of two or more thereof.

Further additions to the electrolytic solution may include, but are not limited to, one or more of the following performance enhancing additives: overcharge protection agent, non-flammable agents, anti-swelling agent, low temperature performance enhancers. Examples of such compounds include biphenyl, iso-propyl benzene, hexafluorobenzene, phosphazenes, organic phosphates, organic phosphonates, and alkyl and aryl siloxanes, The total concentration of such additives in the solution preferably does not exceed about 5 wt%.

**Assembly of a Lithium Ion Secondary Battery.** In a dry box under an inert atmosphere, a lithium ion secondary battery was assembled utilizing a prismatic cell design. That is, an arrangement containing a microporous polypropylene separator, a cathode, another microporous polypropylene separator, and an anode were laid on top of one another and then wrapped tightly together. The assembly was then inserted into the opened end of a prismatic aluminum can. Current leads were attached to both the cathode and anode, with proper insulation against each other, and connections made to the outside terminals. The open end of the prismatic cell was then covered except for a small hole. Through this hole the inventive electrolytic solution was added to each of the batteries and allowed to absorb. Finally, a small steel ball was used to seal the cell, completing the assembly of the prismatic type lithium ion secondary battery.

**Testing of the Batteries.** Evaluation of the aforementioned assembled battery was carried out by an initial charging and discharging process (formation and capacity confirmation), followed by rate discharge, cycle life testing, high temperature storage and cycling, and low temperature discharge.

**Cycle life.** Cycle life testing is conducted at room temperature or 60 °C, which was the "high temperature," sometimes indicated by "HT," by repeatedly charging and discharging the prepared cells according to the following schedule: charging the aforementioned initially charged/discharged battery at a constant current rate of C (700mA) to 4.4 V and then charged at a constant voltage of 4.4 V until the current was less than or equal to 35 mA. The battery was then discharged at a constant current rate of C (700 mA) until the cut-off voltage 3.0 V was reached.

Certain embodiments of the invention are envisioned where at least some percentages, temperatures, times, and ranges of other values are preceded by the modifier "about." "Comprising" is intended to provide support for "consisting of" and "consisting essentially of." Where ranges in the claims of this provisional application do not find explicit support in the specification, it is intended that such claims provide their own disclosure as support for claims or teachings in a later filed non-provisional application. Numerical ranges of ingredients that are bounded by zero on the lower end (for example, 0-10 vol% VC) are intended to provide support for the concept "up to [the upper limit]," for example "up to 10 vol% VC," vice versa, as well as a positive recitation that the ingredient in question is present in an amount that does not exceed the upper limit. An example of the latter is "comprises VC, provided the amount does not exceed 10 vol%." A recitation such as "8-25 vol% (EC + MEC + VC)" means that any or all of EC, MEC and/or VC may be present in an amount of 8-25 vol% of the composition.

### EXAMPLES

Room temperature and 60°C cycling performance/ Capacity retention after 300 charge-discharge cycles.

### EXAMPLE 1

The electrolyte solution is prepared by dissolving 1M LiPF₆ in a mixed solvent of ethylene carbonate (EC) and ethylmethyl carbonate (EMC) at a ratio of 3 to 7 by volume, to which vinylene carbonate (VC) at 2% by weight, (1,1,2,2)-tetrafluoro-3-(1,1,2,2-tetrafluoroethoxy)-propane (FE) at 2% by weight and 1,3-propane sultone (PS) at 1% by weight (all based on the total weight of the solution) is added.

The resulting electrolyte solution was injected into an aluminum can prismatic battery comprising a cathode of LiNi₀₃₃Co_{0.33}Mn_{0.33}O₂ and an anode of artificial graphite.

### EXAMPLE 2

A battery is prepared in the same way as example 1 except that, instead of VC, fluoroethylene carbonate (FEC) at 3% by weight is used.

### EXAMPLE 3

A battery is prepared in the same way as example 1 except that, instead of VC, methylene ethylene carbonate (MEC) at 1.5% by weight, and instead of FE, lithium difluoro(oxalate) borate (LiDFOB) at 1.5% by weight are used.

### COMPARATIVE EXAMPLE 1

A battery was prepared in the same way as example 1 except that VC, FE and PS are not used.

### COMPARATIVE EXAMPLE 2

A battery was prepared in the same way as example 1 except that, instead of VC, FE and PS, only VC at 2% by weight is used.

### COMPARATIVE EXAMPLE 3

A battery was prepared in the same way as example 1 except that, instead of VC, FE and PS, only FEC at 3% by weight is used.

### COMPARATIVE EXAMPLE 4

A battery was prepared in the same way as example 1 except that, instead of VC, FE and PS, only LiDFOB at 1.5% by weight is used.

### COMPARATIVE EXAMPLE 5

A battery was prepared in the same way as example 1 except that, instead of VC, FE and PS, only FE at 2% by weight and PS at 1% by weight are used.

### COMPARATIVE EXAMPLE 6

A battery was prepared in the same way as example 1 except that, instead of VC, FE and PS, only FEC at 3% by weight and FE at 2% by weight are used.

### COMPARATIVE EXAMPLE 7

A battery was prepared in the same way as example 1 except that, instead of VC, FE and PS, only MEC at 1.5% by weight and LiDFOB at 1.5% by weight are used.

The batteries using electrolytes prepared according to Examples 1 through 3 and Comparative examples 1 through 7 were charged to 4.4 V at 1C constant current and discharged to 3.0 V at constant current. This cycle was repeated hundreds of times at room temperature or 60°C and the capacity retention ratio was calculated according to the formula: capacity retention ratio after n^{th} cycles =(discharge capacity at n^{th} cycle/ discharge capacity at 1^{st} cycle) × 100 (%). The results are shown below in the last column of Table 1.

As shown in Table 1, the addition of three distinct additives that come from three components (c), (d) and (e) (Examples 1 to 3, respectively) greatly improved both room temperature and high temperature cycling performance of batteries. When only one or two of these three components is used in the electrolyte solution (comparable examples), the capacity retention under both room and high temperature cycling is inferior. Therefore there is direct evidence that at least one of each of these three components must be present to ensure optimal cycling performance in these cells cycled to higher voltages.

| | Additives | | | RT cycling | 60°C cycling |
|---|---|---|---|---|---|
| | Component (c) | Component (d) | Component(e) | Capacity retention after 300 cycles (%) | Capacity retention after 100 cycles (%) |
| Example 1 | 2% VC | 2% FE | 1% PS | 83.0 | 89.4 |
| Example 2 | 3% FEC | 2% FE | 1% PS | 92.0 | 91.9 |
| Example 3 | 1.5% MEC | 1.5% LiDFOB | 1% PS | 84.8 | 88.9 |
| Comparable example 1 | | | | 7.8 | 0.0 |
| Comparable example 2 | 2% VC | | | 74.2 | 1.1 |
| Comparable example 3 | 3% FEC | | | 41.5 | 77.2 |
| Comparable example 4 | | 1.5% LiDFOB | | 52.9 | 72.8 |
| Comparable example 5 | | 2% FE | 1% PS | 22.1 | 0.0 |
| Comparable example 6 | 3% FEC | 2% FE | | 79.3 | 80.4 |
| Comparable example 7 | 1.5% MEC | 1.5% LiDFOB | | 82.2 | 83.3 |

While the invention herein disclosed has been described by means of specific embodiments and applications thereof, numerous modifications and variations could be made thereto by those skilled in the art without departing from the scope of the invention set forth in the claims. Furthermore, various aspects of the invention may be used in other applications than those for which they were specifically described herein.

## Claims

1. An electrolytic solution for a secondary electrochemical energy storage device comprising
(a) one or more ionic salts, the ionic salts being halogenated lithium salts;
(b) one or more non-aqueous solvents;
(c) at least one solid electrolyte interphase former, the solid electrolyte interphase former being selected from the group consisting of vinylene carbonate, monofluoroethylene carbonate, methylene ethylene carbonate, vinyl ethylene carbonate, lithium bis(oxalate)borate and mixtures thereof, each provided in an amount of 0.1 to 20% by weight of the electrolyte solution;
(d) at least one fluorinated compound, the fluorinated compound being (1,1,2,2)-tetrafluoro-3-(1,1,2,2-tetrafluoroethoxy)-propane, provided in an amount of 0.1 to 5.0% by weight of the electrolyte solution; and
(e) at least one high temperature stability compound selected from the group consisting of propane-1,3-sultone, butane-1,4-sultone, prop-1-ene-1,3-sultone and mixtures of one or more thereof, each provided in an amount of 0.1 to 5.0% by weight of the electrolyte solution; wherein (c), (d) and (e) are each different compounds and each are different from the ionic salts (a) and solvents (b).

2. An electrolytic solution according to claims 1 wherein the one or more non-aqueous solvents (b) comprise carbonates, carboxylates, ethers, lactones, sulfones, phosphates, nitriles, or ionic liquids or mixtures of two or more thereof.

3. An electrolytic solution according to claim 1 or 2 wherein the one or more non-aqueous solvents (b) comprise carbonates selected from the group consisting of ethylene carbonate, ethyl methyl carbonate and mixtures thereof.

4. A secondary electrochemical energy storage device comprising
I. an anode;
II. a cathode;
III. an electrolytic solution according to any one of claims 1 to 3.

## Patentansprüche

1. Eine Elektrolytlösung für ein sekundäres, elektrochemisches Energiespeicherungssystem, das Folgendes umfasst:
(a) ein oder mehrere Ionensalze, wobei die lonnensalze halogenhaltige Lithiumsalze sind,
(b) ein oder mehrere nichtwässrige Lösemittel,
(c) mindestens ein System zum Bilden von festen elektrolytischen Zwischenphasen, wobei das System zum Bilden von festen elektrolytischen Zwischenphasen ausgewählt wird aus folgender Gruppe, Vinylen-Karbonat, Mono-Fluor-Ethylen-Karbonat, MethylEthylen-Karbonat, Vinyl-Ethylen-Karbonat, Lithium Bis-(Oxalat)-Borat und Mischungen derselben, wobei jedes in einer Menge von 0,1 bis 20 Gew.% der Elektrolytlösung vorhanden ist,
(d) mindestens eine fluorierte Verbindung, wobei die fluorierte Verbindung (1,1,2,2)-Tetrafluor-3-(1,1,2,2-Tetrafluor-Ethoxy)-Propan ist, das in einer Menge von 0,1 bis 5,0 Gew.% der Elektrolytlösung vorgesehen ist, und
(e) mindestens eine hitzebeständige, Stabilitätsverbindung ausgewählt aus folgender Gruppe, Propan-1,3-Sulton, Butan-1,4-Sulton, Prop-1-en-1,3-Sulton und Mischungen eines oder mehrerer derselben, jedes in einer Menge von 0,1 - 5,0 Gew.% der Elektrolytlösung, wobei (c), (d) und (e) in jedem Fall verschiedene Verbindungen sind und keine eins der Ionensalze ist.

2. Eine Elektrolytlösung gemäss Anspruch 1, in der ein oder mehrere nichtwässrige Lösemittel (b) Karbonate, Carboxylate, Ether, Laktone, Sulfone, Phosphate, Nitrile oder ionische Flüssigkeiten oder Mischungen von einem oder mehreren derselben enthalten.

3. Eine Elektrolytlösung gemäss Anspruch 1 oder 2, in der ein oder mehrere nichtwässrige Lösemittel ausgewählt werden aus der Gruppe, die Ethlen-Karbonat, Ethyl-Methyl-Karbonat und Mischungen davon umfasst.

4. Ein sekundäres, elektrochemisches Energiespeicherungssystem, das Folgendes umfasst:
I. Eine Anode
II. Eine Kathode
III. Eine Elektrolytlösung gemäss irgendeinem der Ansprüche 1 bis 3.

## Revendications

1. Une solution électrolytique pour un dispositif de stockage électrochimique d'énergie secondaire comprenant :
a) un ou plusieurs sels ioniques ; ces sels ioniques étant des sels de lithium halogénés ;
b) un ou plusieurs solvants non-aqueux ;
c) au minimum, un formeur d'interface à électrolyte solide (SEI), ledit formeur d'interface à électrolyte solide (SEI) étant sélectionné d'un groupe constitué de carbonate de vinylène, carbonate de monofluoréthylène, carbonate d'éthylène-méthylène, bis(oxalate)borate de lithium et des mélanges correspondants, chacun d'eux fourni selon une quantité de 0,1 à 20% en masse de la solution électrolyte ;
d) au minimum, un composé fluoré, ledit composé étant 1-1-2-2-tétrafluoro-3(1,1,2,2-tétrafluoréthoxy)-propane, fourni selon une quantité de 0,1 à 20% en masse de la solution électrolyte ; et
e) au minimum, un composé avec une bonne résistance à la température, sélectionné d'un groupe constitué de propane-1,3-sultone, butane-1,4-sultone, prop-1-ene-1,3-sultone et des mélanges d'une ou plusieurs de ces éléments, chaque élément fourni selon une quantité de 0,1 à 20% en masse de la solution électrolyte.
où (c), (d) et (e) sont chacun des composés différents et chacun est différent des sels ioniques a) et des solvants (b).

2. Une solution électrolytique conformément aux revendications 1, où un ou plusieurs solvants aqueux (b) comprennent des carbonates, des carboxylates, des éthers, des lactones, des sulfones, des phosphates, des nitriles o des liquides ioniques ou des mélanges de deux ou de plusieurs de ces éléments.

3. Une solution électrolytique conformément aux revendications 1 ou 2, où un ou plusieurs solvants aqueux (b) comprennent des carbonates sélectionnés du groupe constitué de carbonate d'éthylène, carbonate d'éthyle-méthyle et de mélanges de ces éléments.

4. Un dispositif de stockage d'énergie électrochimique secondaire comprenant :
I. une anode ;
II. une cathode ;
III. une solution électrolytique conformément à l'une des revendications 1 à 3.
